# EUROPEAN PATENT APPLICATION

(11) **EP 1 271 224 A1**
(43) Date of publication of application: **02.01.2003**
(21) Application number: 01309129.3
(22) Date of filing: 29.10.2001
(51) Int. Cl.: G02F 1/1339

(54) **Method of manufacturing spacers for flat panel displays**

(30) Priority: 29.06.2001 SG 200103998
(71) Applicant: Data Storage Institute, Singapore 117608 (SG)
(72) Inventor: Wang, Weijie, Singapore 640520 (SG); Hong, Minghui, Singapore 680288 (SG); An, Chengwu, Singapore 650113 (SG); Lu, Yong Feng, Singapore 604287 (SG)
(74) Representative: Mohun, Stephen John

(57) **Abstract**

In a flat panel display, a spacer array is created on the transparent substrate (10') to maintain the two substrates (10,10') at a pre-determined spacing in the finished panel. The spacers (20') are distributed between the two substrates, which are sealed using sealant (18) resulting in a cell gap with pre-determined spacing distance.
The gap between the two sealed substrates (10,10') forms a cell for a liquid crystal (22). ACO₂ laser is used to create the spacers on a surface of a glass substrate (10'). The glass is locally melted by the converged laser beam. Under the effect of surface tension the melted glass forms bumps which remain during cooling. The laser-induced spacers (20') have a pre-determined profile with uniform height, diameter and distribution. The spacer characteristics can be flexibly and precisely controlled.

## Description

This invention relates to flat panel display devices, and to a method for their manufacture, and is concerned particularly with flat panel display devices having uniform spacing between substrate plates, and an associated manufacturing method.

Display devices used presently include Cathode ray tubes (CRT), and flat panel display devices such as liquid crystal displays (LCD), plasma displays (PDP), electro-luminescent displays (ELD), field emission devices (FED), and light emitting diodes (LED). Among them the CRT has excellent display quality and brightness compared to the others. However, it is relatively bulky and heavy and so does not lend itself to use as a large screen display.

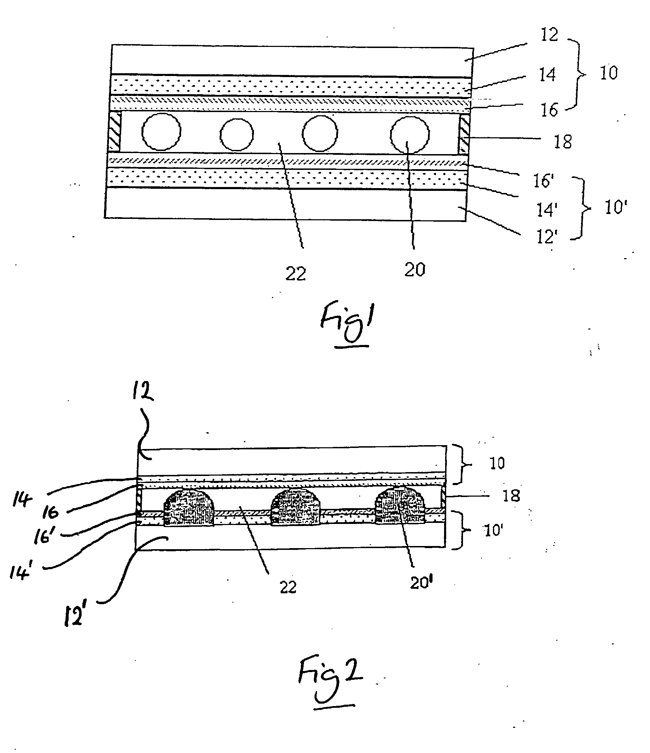

The flat panel display is now widely used due to its light weight and small size. The display characteristics have been improved through years of research and development. One type of LCD, as shown in Fig. 1, is constructed by placing a thin layer of liquid crystal between two transparent plates, which are comprised of glass substrates (12 and 12') coated with Indium-Tantalum oxide (ITO) electrodes (14 and 14') and alignment layers (16 and 16') to form the first (10) and second (10') substrates respectively. Spacing elements, commonly referred to simply as spacers (20) are scattered between the alignment layers of the two substrates, which are therefore spaced apart to form a cell gap after being sealed with a sealant 18. The liquid crystal (LC) material (22) is injected into the cell gap to form a liquid crystal layer with a required thickness.

In the LCD with the above structure, the alignment of the liquid crystal is changed by the application of an electric field, specifically by applying an external voltage to the transparent electrodes.

The liquid crystals are either transparent or opaque to incident light, depending upon their alignment. Thus, by controlling the alignment pattern of the liquid crystals the transmission of light through the display may be controlled.

The driving characteristics of the liquid crystals are largely influenced by the thickness of the liquid crystal layer of the LCD device. Therefore, it is critically important to maintain the spacing of the cell gap in order to achieve uniform thickness of the liquid crystal layer.

Uniform cell spacing is achieved through the use of spacers. Spacers are usually glass or polystyrene spheres, or glass fibers of a chosen diameter. They are usually available in half-micron increments in diameter. Fine adjustment of the spacing distance can be achieved by controlling the dispersion density of the spacers; the spacers should be distributed evenly throughout the cell.

The choice of spacer type is dependent upon its desired properties as well as the actual display materials. Plastics spacers are necessary when plastic substrates are used. An advantage of plastics spacers is that their thermal expansion is similar to that of the liquid crystal material. This means that at higher temperatures when the liquid crystal expands and causes the cell to bow outward, the spacers will expand at the same rate, maintaining the cell gap. Glass spacers do not expand as quickly, and can float freely at higher temperatures. Glass fibers are extremely effective at maintaining cell thickness, but are not used very often in active matrix applications for fear of scratching the thin-film transistor (TFT) circuits - glass spheres are used instead.

A variety of methods are available for spacer application, though most in use are based on the same concept. The preferred method of application is to use a controlled pulse of air of disperse the spacers, which then settle onto the substrate. Many industrial applicators consist of a glass box into which a fine cloud of spacers is introduced. The spacers then settle onto the substrate. This is sometimes aided by the use of static charge, but the static charge in the chamber (especially from triboelectric effects) can cause spacers to clump together.

Solvent assisted application can also be used. An airbrush or spray bottle can be used with a safe solvent to apply the spacers. This has the distinct disadvantage of contacting the alignment layer with the solvent. This can destroy alignment if the materials are not compatible, or cause more subtle changes such as pretilt lowering (especially in high pretilt materials). In addition, substrates cannot usually be reworked, as the spacers tend to stick quite well to the substrate.

In summary, previously considered LCD spacer particles are often scattered irregularly, and they tend to cluster, resulting in overcrowding in some regions while leaving other regions depleted, causing a possible thickness variation of the liquid crystal layer. Further, the diameters of the spacers may be non-uniform, which causes difficulty in controlling the spacing distance. Also, the spacers are not fixed in the cell; they flow during the injection of the liquid crystal material. The alignment layer and the electrodes may be damaged by the clustered spacers, when the two substrates are stacked and sealed under pressure. As a result, the LCD does not have good light blocking and transmitting characteristics. The problem is more serious for larger screen LCD displays.

Other spacer techniques have been developed to improve display characteristics. Photolithography techniques employ photosensitive material deposited on the substrate as a photoresist, the substrate being then exposed to light which results in the creation of spacers. However, this method may cause damage to the alignment layer of the LCD substrate.

In order to improve the display characteristics, there is a need for a new technique for forming spacers in order to maintain a constant spacing distance.

According to one aspect of the invention there is provided a method of forming a flat panel display device having two substantially parallel substrate plates defining a gap therebetween, each plate having an inner surface facing the other of the plates, the method comprising forming spacing projections, or spacers, on the inner surface of at least one of the plates by irradiating said surface at predetermined locations to cause the surface to melt at said locations, and subsequently allowing the locations to cool and re-solidify, to form said spacers.

The invention also provides an apparatus for forming spacing projections on a substrate plate of a flat panel display device, the apparatus comprising irradiation means for irradiating the substrate plate at predetermined locations and causing the plate to melt at those locations to form spacing projections, or spacers, and a support member for supporting the substrate plate during irradiation, the irradiation beam and the substrate plate being movable relative to each other.

The invention further provides a flat panel display device comprising two substantially parallel substrate plates sealed at their edges to form a panel, and defining a gap therebetween, each plate having an inner surface facing the other of the plates, wherein spacing projections, or spacers, are formed on the inner surface of at least one of said plates at predetermined locations, the spacers being formed of melted and subsequently re-solidified portions of said surface.

Further, preferred features of the invention may be found in the sub-claims appended hereto.

Embodiments of the present invention aim to improve the display characteristics of a panel display by producing spacing elements with well defined and precisely controlled characteristics in order to maintain the cell gap at a constant spacing. In one embodiment a pulsed laser with a wavelength in the infrared spectrum is employed as an energy source to create a spacer array on the display substrate surface. The laser-induced spacers locate between the two substrates when the two substrates are stacked together.

A preferred embodiment of the present invention will now be described, by way of example only, with reference to the accompanying drawings, in which:
Figure 1 is a sectional view showing the structure of a known LCD;
Figure 2 is a sectional view of a structure of an LCD according to an embodiment of the present invention;
Figure 3 is a schematic diagram of a laser-induced spacer formation apparatus in accordance with an embodiment of the present invention;
Figure 4 is an Automatic Force Microscopy (AFM) observation of laser-induced spacers, showing the three-dimensional image of the laser spacer array;
Figure 5 is another AFM observation of the laser-induced spacers, showing the three-dimensional image of the laser spacer distribution, and
Figure 6 is an AFM analysis showing a two-dimensional spacer profile.

In order to achieve the above-mentioned objectives, in one embodiment a pulsed laser with a wavelength in the infrared spectrum is applied to interact with one or both of the transparent display substrates. The spacer array is formed on the substrates under laser irradiation, the spacers having uniform height and being of regular distribution, providing a uniform cell gap for e.g. the liquid crystal in the case of an LCD.

The laser beam output from the laser source irradiates the substrate surface through an optical system. Appropriate processing parameters, such as laser wavelength, laser pulse duration, laser power and the speed of the positioning stage are selected for desired spacer characteristics of pre-determined spacer height, diameter, and distribution.

When the substrate material absorbs the laser energy, the photon energy converts to thermal energy resulting in a rising of the substrate temperature. The local material becomes molten when the temperature exceeds its melting point. The laser-induced spacers are formed because of thermal physics effects during the rapid melting and cooling process; specifically the thermal capillary wave effect. A pool of molten material is formed due to the brief laser irradiation. A "bump" appears during re-solidification due to the hydrodynamic response of the molten material to surface tension gradients, determined by temperature gradients which are responsible for the thermal capillary wave effect. According to this theory, the bumps are formed through the excitation of capillary waves at the liquid/air interface, which waves solidify to form the bumps or spacers. As there are no other materials involved and no material is removed from the substrate, a contamination-free process is achieved.

The following is a detailed description of an embodiment of the invention which has, as its example, a liquid crystal display as the flat panel display device.

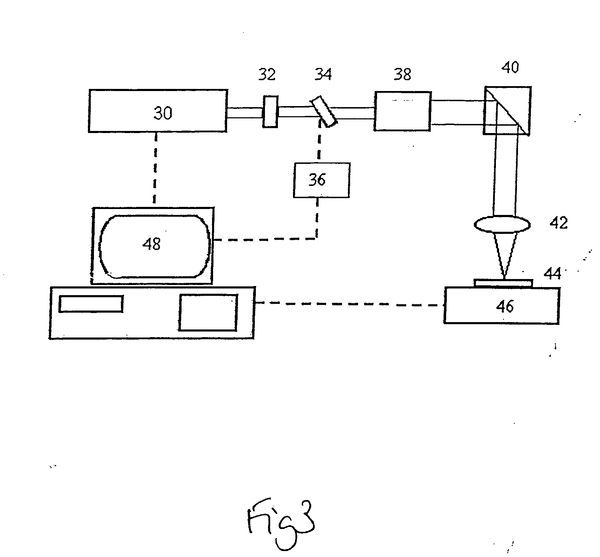

Using like reference numerals for like features as Figure 1, Figure 2 shows, in sectional view, a liquid crystal display with spacer elements, or "spacers" 20 formed on a lower substrate 10' in accordance with an embodiment of the invention.

The laser spacer array is created on the transparent substrate 10' to maintain the two substrates at a pre-determined spacing in the finished panel. The two substrates 10,10' consist of the transparent substrate, ITO electrode layer 14, and alignment layer 16. The spacers 20 are distributed between the alignment layers on the two substrates, which are sealed using sealant 18 resulting in a cell gap with pre-determined spacing distance.

The gap between the two sealed substrates 10 and 10' forms a cell for a liquid crystal 22. The gap of the cell must be uniform for good liquid crystal performance. The laser-induced spacers 20' have a pre-determined profile with uniform height, diameter and distribution. The spacer characteristics can be flexibly and precisely controlled. Nano-indentation test results show that there are no obvious changes in the hardness of the glass substrates before and after the laser modification process. As the spacers are fixed on the substrate, there are no spacer clumps.

In the design shown in Figure 2, the laser-induced spacer array is fabricated on one of the transparent substrates 10' only. The spacers 20' rest on the opposite substrate when the two substrates are stacked together and sealed to form a cell for the injection of the liquid crystal. The gap in the cell is therefore the same as the spacer height. As the spacer height is precise and regular, the gap is uniform, resulting in a uniformly thick liquid crystal layer.

In an alternative embodiment (not shown), the laser-induced spacers are fabricated on both of the transparent substrates in registration. The spacers on the two substrates face, and rest on, each other when the substrates are stacked and sealed together. The spacing distance between the two substrates is therefore twice the spacer height in this case.

In general, the number of laser spacers in between the two substrates is required to be at least sufficient to support the sealing force and the load of the substrate. Therefore, spacer distribution is another critical parameter for the LCD structure. The spacer distribution is regular and can be easily controlled in a technique according to the present invention by e.g. matching the laser pulse-frequency and the running speed of a positioning stage on which the substrate is mounted. Accurate alignment of the laser spacers can thus be achieved readily.

In the following description, a laser-induced spacer formation system and the spacer characteristics are explained in detail:

Figure 3 shows an embodiment of laser-induced spacer formation system developed in accordance with this invention. The laser beam output from the laser source 30 passes through an optical system, and is focused on the substrate surface 44, which is mounted on a positioning stage 46. Therefore, the substrate surface is modified by the laser irradiation, and the spacer distribution can be controlled flexibly. A process controller controls the laser output energy, and the speed of movement of the positioning stage.

A pulsed laser 30 with a short pulse duration and wavelength in the infrared spectrum (for example, a CO₂ laser for pulse duration of 50 µs and wavelength of 10.6 µm) is applied to offer a pulse energy source to irradiate and modify the transparent substrate surface.

In more detail, the laser beam emitted from the laser source passes through a beam attenuator 32. A small amount of the laser energy (for example, 5%) is sampled and detected by an energy meter 36, and the laser pulse energy is monitored in real time. The detected value is sent to the process controller 48 to compare with a pre-set value. If there is any energy difference, the process controller generates a signal to the laser controller, which adjusts the laser output. The laser beam passes through a beam attenuator 32 followed by a beam expander 38, mirror 40, and focusing lens 42, and finally irradiates the substrate surface 44 which is located on a positioning stage 46. By control of the laser parameters and the speed of the positioning stage 46, laser-induced spacers with pre-determined shape, height, diameter and distribution may be achieved.

To ensure the correct alignment of the laser-induced spacers, a precise positioning stage is required to locate the laser spacers on the substrates. Also, the laser pulse frequency and the speed of movement of the positioning stage should be matched very well so as to ensure the creation of a spacer array with precisely pre-determined distribution.

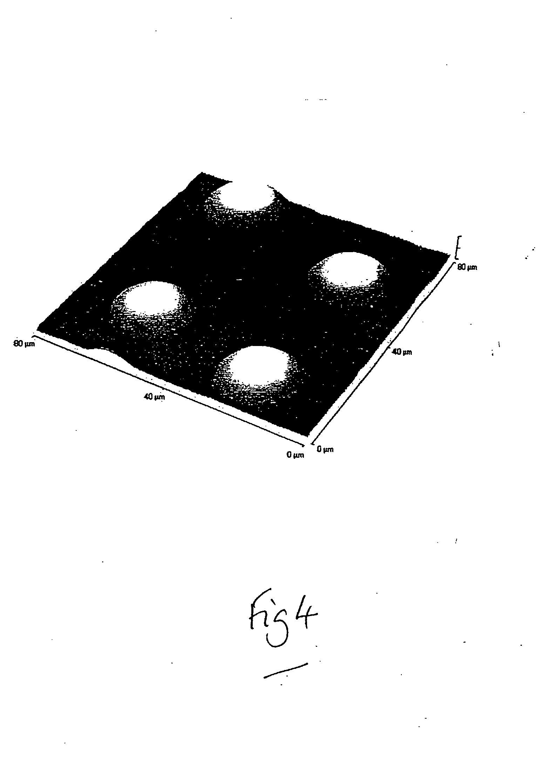

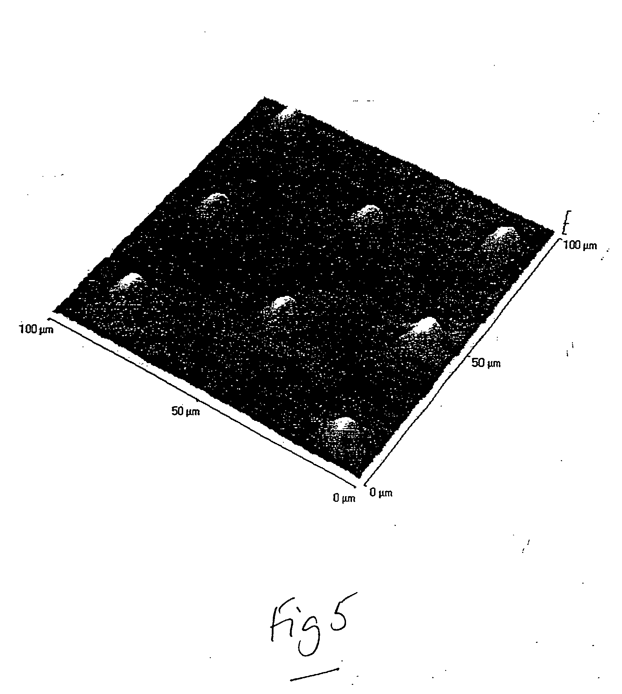

Figures 4 and 5 show three-dimensional AFM images of the laser-induced spacers, which have uniform height and distribution. The laser spacers are dome-like in shape with smooth top surface. The spacer height is defined as the distance from the top surface level of the spacer to the substrate surface level, and the spacer diameter is measured at the substrate surface level.

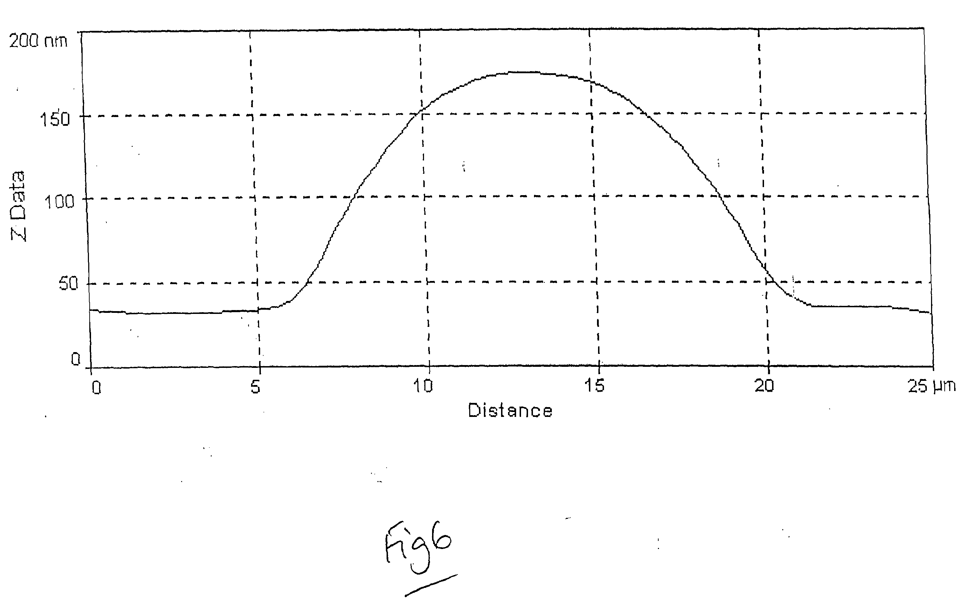

Figure 6 shows the AFM profile analysis of the laser spacer obtained in accordance with the present invention.

Advantages of the above described technique for flat panel display devices, compared to the conventional techniques, include the following:
- Regular spacer height, and regular spacer distribution, which ensure the uniform thickness of e.g. the liquid crystal layer;
- Fixed spacers; the display structure has no need for a spacer dispersion process, and is also free from the clumping problems associated with previous techniques;
- Flexible control in spacing distance of the cell gap, compared to the half-micron increment in the prior technique;
- Precise and flexible control in spacer distribution to allow accurate spacer alignment;
- Freedom from substrate degradation resulting from a different thermal expansion coefficient of the substrate materials and spacer materials associated with the prior art;
- A contamination-free process as there are no extra materials involved and no substrate materials removed in the spacer formation processes;
- An easy and fast manufacturing process suitable for commercial considerations in industrial applications.

The intention is to produce spacers which have uniform height and distribution, and are fixed on the substrate surface, so as to maintain a constant gap spacing for, in the case of an LCD, the liquid crystal layer. The laser-induced spacers have the characteristics of uniform and controllable spacer height, which are critical to maintain the uniform thickness of liquid crystal layer. The spacers are fixed on the substrate, and their positions may be controlled so as to meet the ideal distribution. All of these characteristics have the advantages of flexible and precise control compared to the previously considered methods, in which the spacer height may vary and the locations are not fixed. The two substrates are spaced apart to the desired distance, which correlates to the spacer height. The spacers are fixed on the substrate in pre-determined distribution, which is realized by matching the laser processing parameters. The clumping problems in the prior spacer dispersal processes are avoided. Furthermore, a contamination-free process is achieved, as there are no other materials involved in the process, such as photoresist material in the prior photolithography technique. Also, the spacer formation mechanism in this technique is laser thermal interaction. The local area of the glass substrate is molten under laser irradiation. The molten material is then cooled down to re-solidify. The laser-induced spacers are formed because of the thermal capillary wave effect. Therefore, no bulk substrate materials- are removed from the substrate surface, which might otherwise cause contamination on the surrounding surface. The technique is a genuinely contamination-free process, which is critical to display-manufacturing processes.

Although the example considered above is that of a liquid crystal display, it will be understood that the invention is equally applicable to other structures such as other types of flat panel display, in which two substrates must be maintained spaced apart at a uniform distance.

## Claims

1. A method of forming a flat panel display device having two substantially parallel substrate plates defining a gap therebetween, each plate having an inner surface facing the other of the plates, the method comprising forming spacing projections, or spacers, on the inner surface of at least one of the plates by irradiating said surface at predetermined locations to cause the surface to melt at said locations, and subsequently allowing the locations to cool and re-solidify, to form said spacers.

2. A method according to claim 1 wherein the method includes irradiating the inner surfaces of both plates to form spacers on each surface.

3. A method according to claim 2 wherein the method comprises stacking the plates such that the spacers lie in registration and rest against each other.

4. A method according to any of claims 1 to 3 wherein the spacers have a substantially uniform profile.

5. A method according to any of claims 1 to 4 wherein the spacers are distributed on the or each inner surface substantially uniformly.

6. A method according to any of claims 1 to 5 wherein the or each surface is irradiated with laser radiation.

7. A method according to claim 6 wherein a laser irradiates the or each surface with infra-red radiation.

8. A method according to claim 6 or 7 wherein the laser is a CO₂ laser.

9. A method according to any of claims 6 to 8 wherein the or each surface is irradiated using pulsed laser radiation.

10. A method according to any of claims 6 to 8 wherein the or each surface is irradiated using continuous laser radiation.

11. A method according to any of claims 1 to 10 wherein the display device is a liquid crystal display.

12. A method according to any of claims 1 to 10 wherein the display device is a plasma display.

13. Apparatus for forming spacing projections on a substrate plate of a flat panel display device, the apparatus comprising an irradiation means for irradiating the substrate plate at predetermined locations and causing the plate to melt at those locations to form spacing projections, or spacers, and a support member for supporting the substrate plate during irradiation, the irradiation beam and the substrate plate being movable relative to each other.

14. Apparatus according to claim 13 wherein the support member comprises a movable positioning table for moving the substrate plate relative to the irradiation beam.

15. Apparatus according to claim 13 or claim 14 wherein the irradiation means comprises a laser.

16. A flat panel display device comprising two substantially parallel substrate plates sealed at their edges to form a panel, and defining a gap therebetween, each plate having an inner surface facing the other of the plates, wherein spacing projections, or spacers, are formed on the inner surface of at least one of said plates at predetermined locations, the spacers being formed of melted and subsequently re-solidified portions of said surface.

17. A flat panel display device according to claim 16 wherein there are spacers formed on the inner surfaces of both plates.

18. A flat panel display device according to claim 17 wherein the plates are juxtaposed such that the spacers of one plate lie in registration with, and rest against, those of the other plate.

19. A flat panel display device according to any of claims 16 to 18 wherein the spacers have a substantially uniform profile.

20. A flat panel display device according to any of claims 16 to 19 wherein the spacers are distributed on the or each inner surface substantially uniformly.
